# EUROPEAN PATENT APPLICATION

(11) **EP 2 369 410 A1**
(43) Date of publication of application: **28.09.2011**
(21) Application number: 09828933.3
(22) Date of filing: 30.09.2009
(51) Int. Cl.: G03B 21/16, F21S 2/00, F21V 8/00, F21V 29/02, G03B 21/14, H04N 5/74

(54) **ILLUMINATING DEVICE AND PROJECTION IMAGE DISPLAY DEVICE**

(30) Priority: 26.11.2008 JP 2008300417
(71) Applicant: Sanyo Electric Co., Ltd., Osaka 570-8677 (JP)
(72) Inventor: MATSUMOTO Shinya, Moriguchi-shi Osaka 570-8677 (JP); ANDO Takahisa, Moriguchi-shi Osaka 570-8677 (JP)
(74) Representative: Glawe, Delfs, Moll
(86) International application number: PCT/JP2009/067019
(87) International publication number: WO 2010/061684

(57) **Abstract**

[Object]

To provide an illumination device that is capable of suppressing deterioration of a bundle due to heat generated by emission of light, and a projection display device in which the illumination device is installed.

[Constitution]

An illumination device includes: a plurality of light sources 100 which emits laser light; a plurality of optical fibers 200 into which the laser light from the light sources 100 is entered; a bundle 300 which bundles together output end portions of the plurality of optical fibers; and a spot fan 400 which cools down the bundle 300. The spot fan 400 distributes cooling air to the light output end plane of the bundle 300.

## Description

### [Technical Field]

The present invention relates to an illumination device that combines light from a plurality of light sources by optical fibers, and a projection display device having the illumination device.

### [Background Art]

Conventionally, there are known projection display devices (hereinafter, referred to as "projectors") that modulate light from light sources in accordance with image signals and project image light generated by the modulation onto a projection plane. For this type of projectors, in recent years, there has been growing demand for higher-brightness image light with increase of screen size. Accordingly, illumination devices to be installed in projectors need to provide illumination light with higher brightness.

An illumination device in which a plurality of laser light sources are used is described in Patent Document 1. A plurality of laser light sources emitting laser light of red, blue, and green are arranged in the illumination device. Laser light emitted from the laser light sources is entered by color into a rod integrator via optical fibers. The color laser light emitted from the rod integrator is entered via a light-guiding optical system into a spatial modulation element formed by transmissive Liquid Crystal Displays (LCDs), and is modulated in accordance with image signals.
Patent Document 1: JP 2002-214706A

### [Disclosure of the Invention]

### [Problem to be Solved by the Invention]

In such an arrangement in which laser light is guided by optical fibers, output end portions of the optical fibers may be bundled together to combine the laser light. In this case, the bundled portions of the optical fibers are heated to a high temperature due to collection of the laser lights. Accordingly, the output end portions of the optical fibers may be deteriorated. In addition, if the output end portions of the optical fibers are bundled with epoxy resin or the like, the epoxy resin may evaporate due to thermal transfer from the optical fibers, or the like.

The present invention is devised to solve such problems, and therefore an object of the present invention is to provide an illumination device that is capable of suppressing deterioration of a bundle portion of the optical fibers due to heat generated by emission of light, and a projection display device in which the illumination device is installed.

### [Means to Solve the Problem]

A first aspect of the present invention relates to an illumination device. The illumination device in this aspect includes a plurality of light sources which emits light, a plurality of optical fibers into which the light from the light sources is entered, a bundle portion which bundles together output end portions of the plurality of optical fibers, and a cooling system which cools down at least a light output end plane of the bundle portion.

According to the illumination device in the first aspect, the light output end plane of the bundle portion is cooled by the cooling system, which makes it possible to suppress excessive temperature increase at the light output end plane of the bundle portion. Accordingly, it is possible to suppress deterioration of the bundle portion by heat generated due to light emission.

In the illumination device of the first aspect, the cooling system may be configured to distribute cooling air to the light output end plane of the bundle portion. This makes it possible to cool down efficiently the light output end plane of the bundle portion which is most likely to be heated to a high temperature. In addition, distributing cooling air makes it possible to prevent attachment of dust and the like to the light output plane of the bundle portion.

In this case, the cooling system may be configured to distribute cooling air together with anti-static ions. This makes it possible to further prevent attachment of dust and the like to the light output plane of the bundle portion, as compared with the case of supplying only cooling air.

In addition, in the illumination device of the first aspect, the cooling system may be configured to cool down a predetermined area of the bundle portion extending from the light output end plane of the bundle portion. This makes it possible to further suppress thermal deterioration of the bundle portion because both the light output end plane of the bundle portion and the area of the bundle portion near the light output end plane can be cooled down.

In this case, the cooling system may be configured to include a heat sink having heat release effect in the foregoing predetermined area. This makes it possible to further suppress thermal deterioration of the bundle portion because heat release from the predetermined area is facilitated.

In addition, in the illumination device of the first aspect, an antireflection means may be arranged on the output end planes of the optical fibers. This makes it possible to suppress light reflection on the output end planes of the optical fibers with enhanced light use efficiency.

Further, in the illumination device of the first aspect, an optical member may be arranged opposite to the light output end plane of the bundle portion. In this arrangement, the optical member is provided with a light diffusion means or an antireflection means at least on one of a light output plane and a light incidence plane. If the light diffusion means is arranged, it is possible to reduce unevenness of intensity distribution as compared to before light incidence on the optical member, thereby to adjust properly a light spread angle. In contrast, if the antireflection means is arranged, it is possible to decrease light fluxes reflected by the optical member. This makes it possible to increase light use efficiency and suppress temperature increase at the bundle portion resulting from re-entrance of such reflected light.

In this case, the cooling system may be configured to cool down the light incidence plane and the light output plane of the optical member. This makes it possible to suppress thermal deterioration of the optical member.

The illumination device of the first aspect may be configured to further include a rod integrator into which light emitted from the bundle portion is entered. In this arrangement, the rod integrator has a light diffusion means on a light incidence plane. This makes it possible to reduce unevenness of intensity distribution at light incidence on the rod integrator, and control a light spread angle at a proper angle, without having to arrange a diffuser or the like at a preceding stage of the rod integrator.

In this case, a light-transmissive member is desirably arranged between the bundle portion and the rod integrator. Further, an antireflection means is desirably arranged on a light output plane and/or a light incidence plane of the light-transmissive member. This allows the light-transmissive member to efficiently let in the light emitted from the bundle portion into the rod integrator. In addition, the antireflection means suppresses reflection on the surface of the light-transmissive member with enhanced light use efficiency. If the antireflection means is disposed on the light incidence plane of the light-transmissive material, it is possible to decrease light fluxes reflected by the light incidence plane of the light-transmissive member and re-entered into the bundle portion, thereby suppressing temperature increase at the bundle portion.

A second aspect of the present invention relates to a projection display device. The projection display device in this aspect includes an illumination device in the first aspect, a modulating means that modulates light from the illumination device, and a projection lens that enlarges and projects the light modulated by the modulating means. According to the projection display device in the second aspect, it is possible to produce the same advantages as those of the illumination device in the first embodiment.

According to the present invention as described above, it is possible to realize an illumination device that is capable of suppressing deterioration of a bundle portion due to heat generated by emission of light, and a projection display device in which the illumination device is installed.

Advantage or significance of the present invention will be further understood from the description of an embodiment below. However, the following embodiment is merely an example for carrying out the present invention, and the present invention is not limited by the following embodiment.

### [Brief Description of the Drawings]

FIG. 1 is a diagram showing a configuration of an illumination device in a first embodiment of the present invention.
FIG. 2 is a diagram showing a configuration of a spot fan and neighborhood thereof in the first embodiment.
FIG. 3 is a diagram for describing main parts of the illumination device in the first embodiment.
FIG. 4 is a diagram diagrams showing a configuration of an illumination device in a modification example of the first embodiment.
FIG. 5 is a diagram showing a configuration of the illumination device in a modification example of the first embodiment.
FIG. 6 is a diagram showing a configuration of the illumination device in a modification example of the first embodiment.
FIG. 7 is a diagram showing a configuration of an illumination device in a second embodiment.
FIG. 8 is a diagram showing a configuration of a rod integrator in a third embodiment.
FIG. 9 is a diagram showing configuration examples of a bundle in the embodiment.
FIG. 10 is a diagram showing other configuration examples of the bundle in the embodiment.
FIG. 11 is a diagram showing a disposition example of a spot fan in the embodiment.
FIG. 12 is a diagram showing a configuration of an optical system of the projector in the embodiment.

However, the drawings are intended only for illustration and do not limit the scope of the present invention.

### [Best Mode for Carrying Out the Invention]

Preferred embodiments of the present invention will be described below with reference to the drawings.

### <First embodiment>

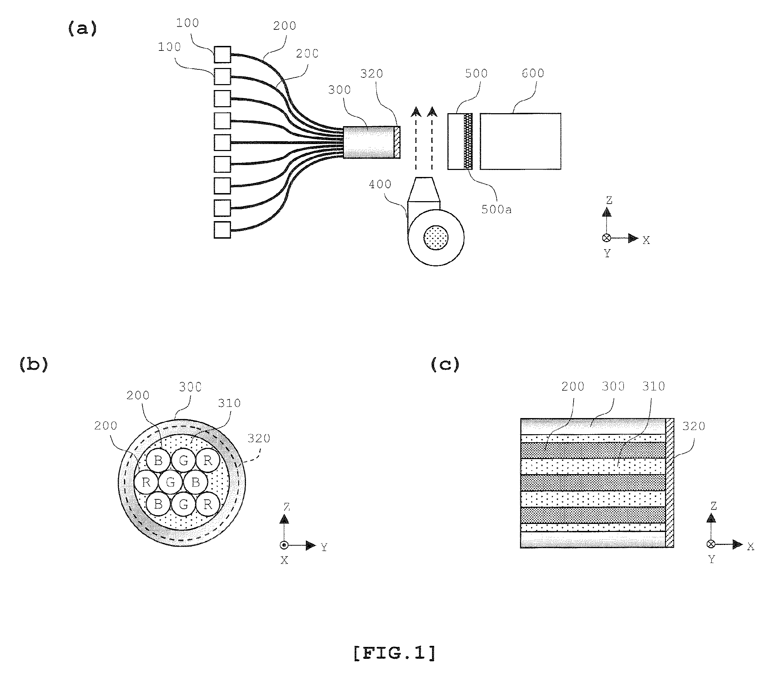

FIGS. 1(a) to 1(c) are diagrams showing a configuration of an illumination device in a first embodiment: FIG. 1(a) is a top view of the illumination device; and FIGS. 1(b) and 1(c) are diagrams of an output end portion of a bundle as seen from X and Y directions, respectively.

Referring to FIG. 1(a), the illumination device includes a plurality of light source portions 100, a plurality of optical fibers 200, a bundle 300, a spot fan 400, a diffuser 500, and a straight rod 600.

In this embodiment, a plurality of (e.g., nine) light source portions 100 is disposed in a line at regular intervals in a Z-axis direction shown in FIG. 1(a), and the optical fibers 200 are arranged in correspondence with the light source portions 100. The light source portions 100 emit red light (R light), green light (G light), or blue light (B light). Emitted laser light is entered into incident end portions of the optical fibers 200, propagated through the optical fibers 200, and then emitted from output end portions of the optical fibers 200.

The bundle 300 bundles all the optical fibers 200 into one at the output end portions. The bundle 300 is formed in a cylindrical shape by a metallic material, resin, or the like.

Referring to FIG. 1(b), the optical fibers 200 are bundled together in a shape adapted to an inner surface of the bundle 300. In this case, it is desired to dispose the optical fibers 200 for R light with less influence on refractive indexes of optical members, as compared with B light and G light, on an external side of the optical fibers 200 for B light and G light. An output end plane of the bundle 300 here has a circular shape, but is not limited to any specific shape and may have a square shape.

Referring to FIGS. 1(b) and 1(c), the bundle 300 is charged with epoxy resin 310 by which to bundle together the output end portions of the optical fibers 200 within the bundle 300. However, the output end planes of the optical fibers 200 are not covered with the epoxy resin 310.

Referring to FIGS. 1(a) and 1(c), the entire output end plane of the bundle 300 is coated with an AR coat 320. Specifically, as shown in FIG. 1(c), the AR coat 320 is applied directly to the output end planes of the optical fibers 200, and is also applied to the end plane of the bundle 300 and the end plane of the epoxy resin 310. If the AR coat 320 is applied, the optical fibers 200 are improved by 3 to 4% in transmission rate at the output end planes. That is, the AR coat 320 suppresses reflection of emitted laser light on the output end planes of the optical fibers 200, thereby resulting in enhanced use efficiency of laser light.

Accordingly, laser light (illumination light) with high brightness which is produced by collecting the laser lights from the light source portions 100 is emitted forward (in an X-axis direction) from the output end plane of the bundle 300.

The AR coat 320 is formed by a dielectric multi-layered film with a heat-absorbing characteristic. Accordingly, when the laser light is emitted from the output end planes of the optical fibers 200, heat absorbed by the AR coat 320 is transferred to an inside of the bundle 300, thereby to raise a temperature at the light output end portion of the bundle 300.

The spot fan 400 is disposed in the vicinity of the output end plane of the bundle 300 and an incidence plane of the diffuser 500. Cooling air delivered from the spot fan 400 cools down the output end plane of the bundle 300 and the incidence plane of the diffuser 500.

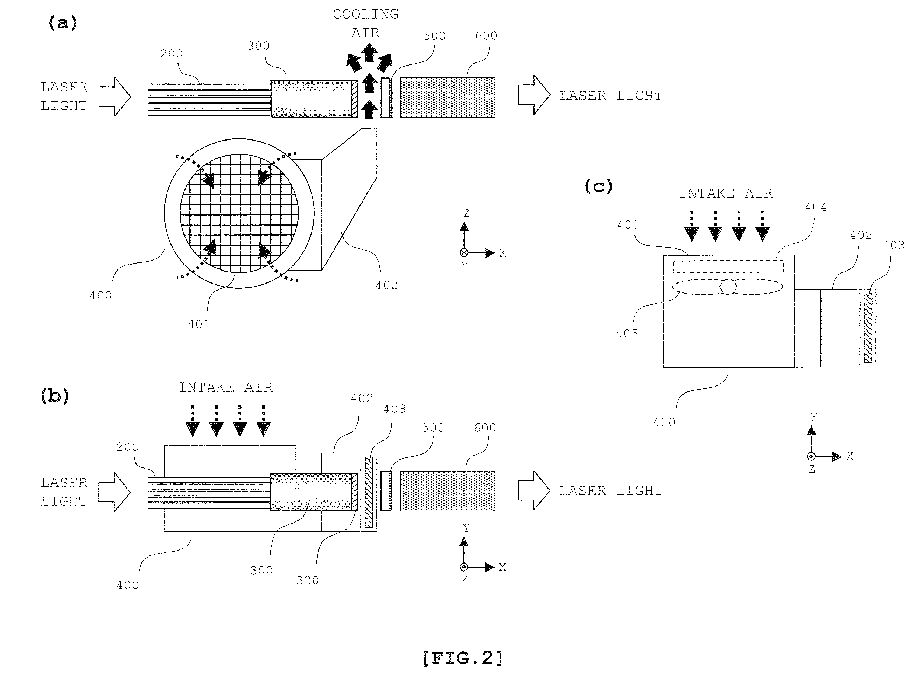

FIG. 2 is a diagram showing positional relationships among the spot fan 400, the bundle 300, and the diffuser 500: FIGS. 2(a) and 2 (b) are a top view and a side view of the spot fan 400 and neighborhood thereof, respectively; and FIG. 2 (c) is a side view of a modification example of the spot fan 400.

As illustrated in the diagrams, the spot fan 400 includes an air inlet 401, a duct 402, and an air outlet 403. The duct 402 is tapered toward the air outlet 403. The air outlet 403 has a shape of a rectangle longer in the Y-axis direction so as to cover sufficiently the output end portion of the bundle 300 and the diffuser 500. There is a gap of several millimeters between a surface of the AR coat 320 and the incidence plane of the diffuser 500. The air outlet 403 has a width in the X-axis direction so as to let cooling air pass through this gap.

Air let in from the air inlet 401 is collected by the tapered duct 402 and is blown off from the air outlet 403 with a relatively strong blast into the gap between the surface of the AR coat 320 and the incidence plane of the diffuser 500. Accordingly, the cooling air passes through the gap to cool down the surface of the AR coat 320 and the incidence plane of the diffuser 500.

If the air outlet 403 is made wider in the X-axis direction to allow cooling air blown off from the air outlet 403 to pass above and under the output end portion of the bundle 300 and above and under the diffuser 500 and the output surface of the same, it is possible to cool down simultaneously the output end portion of the bundle 300, and the entire diffuser 500, in addition to the surface of the AR coat 320, the incidence plane of the diffuser 500. This allows efficient cooling of the portions with sharp temperature increase by heat. In this case, instead of making the air outlet 403 wider in the X-axis direction, the tapered duct may be configured in such a manner that an air path at a leading end of the duct is branched to cool down the output end portion of the bundle 300 and the entire diffuser 500.

By blowing off a strong blast of cooling air from the tapered duct 402, it is possible to prevent that dust and the like are attached to the surface of the AR coat 320 and the incidence plane of the diffuser 500.

Alternatively, as shown in FIG. 2(c), an ion generator 404 may be disposed in the vicinity of the air inlet 401 within the spot fan 400, so that air let in from the air inlet 401 of the fan 405 is mixed with ions and is blown off as cooling air from the duct 402. In this arrangement, the ion generator may be configured to generate anti-static ions by high-voltage discharge in which high voltage is applied between electrodes, for example. If the spot fan 400 is to be equipped with the ion generator in such a manner, the arrangement described in JP 2004-234972A can be employed, for example.

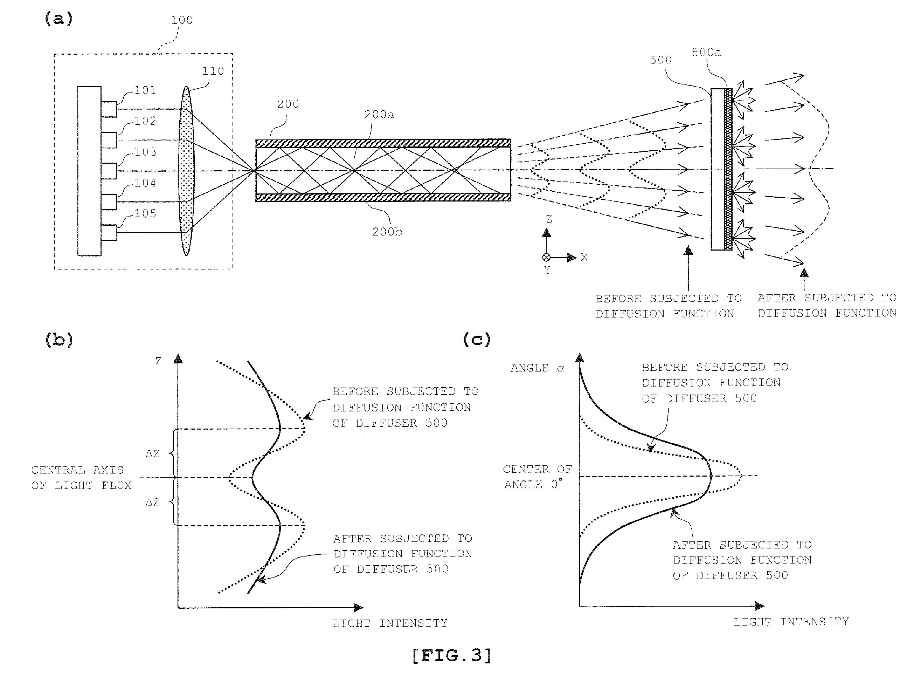

Returning to FIG. 1, the diffuser 500 is made from a parallel plate light-transmissive material that is arranged on a position shifted to the output plane side of the bundle 300. The diffuser 500 has a flat incidence plane that is vertical to the X-axis direction. The output plane of the diffuser 500 includes a diffusion plane 500a. The diffusion plane 500a has a micro-asperity structure. The micro-asperity structure is formed by etching in a hologram pattern or by immersing the surface of the diffuser into a strong acid such as hydrofluoric acid or the like for corrosion. Laser light emitted from the bundle 300 is entered into the incidence plane of the diffuser 500, and then is emitted from the diffusion plane 500a of the output plane of the same. The operation of the diffusion plane 500a will be described later with reference to FIG. 3.

The straight rod 600 is disposed on a position shifted to the output plane side of the diffuser 500. Laser light emitted from the diffuser 500 is entered into an incident end plane of the straight rod 600, unified in intensity distribution or controlled in angle distribution, and then emitted from an output end plane of the straight rod 600.

FIG. 3 (a) is a diagram for describing that laser light is unified in intensity distribution by the diffuser 500. FIG. 3 (a) also illustrates interior configurations of the light source portion 100 and the optical fibers 200.

Specifically, the light source portions 100 have a plurality of (e.g., five) light emitting sources 101 to 105. Laser light emitted from the light emitting sources 101 to 105 is collected by a collecting lens 110 and entered into the incident end portions of the optical fibers 200.

The optical fibers 200 are constituted by a central core 200a and a surrounding clad 200b. Laser light entered into the incident end portions propagates toward the output end portions while being repeatedly reflected within the core 200a.

In this arrangement, multi-mode fibers are used as the optical fibers 200. The multi-mode fibers are large in core diameter and can easily let in laser light from the input end planes. On the other hand, the multi-mode fibers have the property of emitting laser light having been entered with different angle distributions, without any change to the angle distributions. Accordingly, as shown in FIG. 3(a), laser lights having been emitted from the plurality of light emitting sources 101 to 105 and entered with different angle distributions into the optical fibers 200, are output with the still different angle distributions from the optical fibers 200.

By this function, laser light emitted from the optical fibers 200 may cause variations of light and dark in an Y-Z plane shown in FIG. 3(a). In this case, the laser light varies in light intensity in accordance with positions from a central axis of a laser light flux. FIG. 3(b) shows schematically by a dashed line an intensity distribution of laser light immediately before incidence on the diffuser 500 in the Z-axis direction. In the diagram, the light intensity is minimum in the central axis of the light flux and is at a peak in a position distant by ΔZ from the central axis of the light flux in the Z-axis direction. That is, the light intensity reaches its peak in the position distant by ΔZ from the central axis of the light flux in the Z-axis direction. Such an intensity distribution takes place with the same tendency in a light path ranging from the output end planes of the optical fibers 200 to the diffuser 500.

The diffuser 500 unifies the intensity distribution of laser light emitted from the optical fibers 200 by the diffusing function of the diffusion plane 500a. Specifically, since the laser light entered into the diffuser 500 is diffused by the diffusion plane 500a, it is possible to prevent unevenness the laser light emitted from the diffuser 500 in light intensity depending on distances from the central axis of the light flux. FIG. 3 (b) shows schematically by a solid line an intensity distribution of laser light immediately after emission from the diffuser 500. As illustrated in the diagram, the diffusion function of the diffuser 500 lessens unevenness of light intensity depending on distances from the central axis of the light flux, as compared to that before incidence on the diffuser 500.

When the laser light is diffused by the diffuser 500, light with a larger angular component than before the diffusion is generated. For example, on the assumption that the X-axis direction shown in FIG. 3 (a) is set as a center of an angle (0°), FIG. 3(c) shows schematically intensity distributions indicating intensity of light traveling in a direction inclined at an angle α from the X-axis direction. In FIG. 3(c), a dotted line depicts an intensity distribution before passage through the diffuser 500, and a solid line depicts an intensity distribution after passage through the diffuser 500. As illustrated, after having passed through the diffuser 500, the light with a larger angular component than before the passage is generated.

When such light with a larger angular component is generated as described above, a spread angle of a laser light flux becomes larger than before the diffusion. To what degree the spread angle is to become larger depends on an increased amount of the angular component produced by the diffuser 500, that is, depends on the diffusing function (diffusion angle) of the diffusion plane 500a. Therefore, regulating the diffusing function (diffusion angle) of the diffusion plane 500a makes it possible to set the proper spread angle of laser light having passed through the diffuser 500.

The diffusion angle of the diffusion plane 500a can be controlled through making settings. Specifically, if the diffusion plane 500a is formed in a hologram pattern, the diffusion angle is set in accordance with a hologram interference fringe. If the diffusion plane 500a is formed by immersion into hydrofluoric acid, the diffusion angle is set in accordance with a period of time during which the diffusion plane 500a is immersed in hydrofluoric acid.

If the optical fibers 200 are multi-mode fibers as described above, laser light emitted from the optical fibers 200 is larger in unevenness of intensity distribution. If the optical fibers 200 are single-mode fibers, laser light is smaller in such unevenness. However, in the case of either of the two fibers, it is desired to use the diffuser 500 to unify the intensity distribution of laser light.

According to this embodiment as described above, it is possible to cool down the output end portions of the optical fibers 200, the AR coat 320, and the incidence plane of the diffuser 500 by cooling air delivered from the spot fan 400. This suppresses temperature increase at these portions.

In this embodiment, since the bundle 300 and the incidence plane of the diffuser 500 are arranged close to each other, generated heat is less prone to be discharged from the AR coat 320, the bundle 300, and the diffuser 500. In addition, if the heat is absorbed by the AR coat 320 and transferred to the bundle 300, the light output end portion of the bundle 300 is likely to be heated to a high temperature. This phenomenon becomes prominent if the power of the light source portions 100 is enhanced or the number of bundled optical fibers 200 is increased. In this case, the epoxy resin 310 may be evaporated due to temperature increase.

In contrast, this embodiment allows cooling air delivered from the spot fan 400 to cool down the surface of the AR coat 320 and the incident plane of the diffuser 500. Accordingly, it is possible to cool down efficiently the portions with sharp temperature increase by heat and thus suppress evaporation of the epoxy resin 310 due to the temperature increase.

In addition, according to this embodiment, the AR coat 320 suppresses reflection of the laser light on the output end portions of the optical fibers 200, whereby a large amount of laser lights are guided to the incidence plane of the diffuser 500. Further, the laser light is unified in intensity distribution and adjusted in spread angle by the diffusion plane 500a, and then is unified in intensity distribution by the straight rod 600.

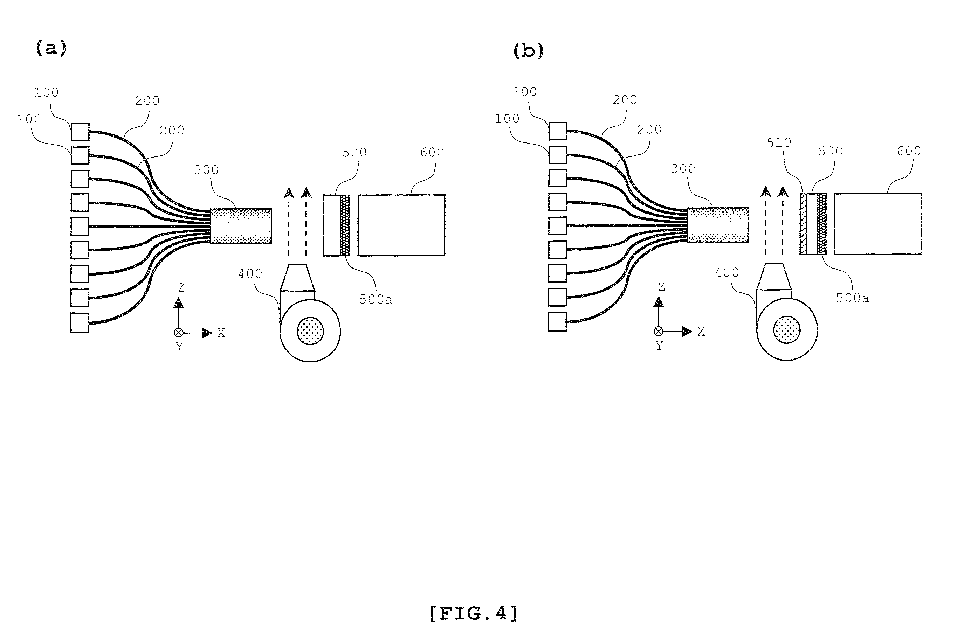

Next, a modification example of this embodiment will be described below. FIG. 4 (a) is a diagram showing a configuration of a modification example 1. This modification example is different from the configuration of FIG. 1(a) in that the output end plane of the bundle 300 is not coated with the AR coat 320.

In this arrangement, laser light emitted from the optical fibers 200 is prone to be reflected on the output end plane of the optical fibers 200, thereby resulting in decreased use efficiency of laser light. However, since the output end plane of the bundle 300 is not coated with the AR coat 320, there is no heat absorption by the AR coat 320. This makes it possible to suppress temperature increase at the output end portion of the bundle 300 as compared with the configuration example of FIG. 1.

According to the configuration of this modification example, it is possible to suppress thermal deterioration of the output end portion of the bundle 300, although use efficiency of laser light is decreased as compared to the configuration of the first embodiment.

FIG. 4(b) is a diagram showing a configuration of a modification example 2 of the first embodiment. This modification example is different from the configuration shown in FIG. 4(a) (modification example 1) in that the incidence plane of the diffuser 500 is coated with an AR coat 510.

In this arrangement, the AR coat 510 prevents laser light emitted from the bundle 300 from being reflected on the incidence plane of the diffuser 500, thereby resulting in enhanced use efficiency of laser light as compared with the configuration of FIG. 4(a). In addition, since the light returned by such reflection is prevented from being re-entered into the output end plane of the bundle 300, it is possible to further suppress temperature increase at the output end plane of the bundle 300.

Accordingly, the configuration shown in FIG. 4(b) makes it possible to provide the advantages in the modification example 1 of the first embodiment, enhance use efficiency of laser light, and suppress thermal deterioration of the output end portion of the bundle 300.

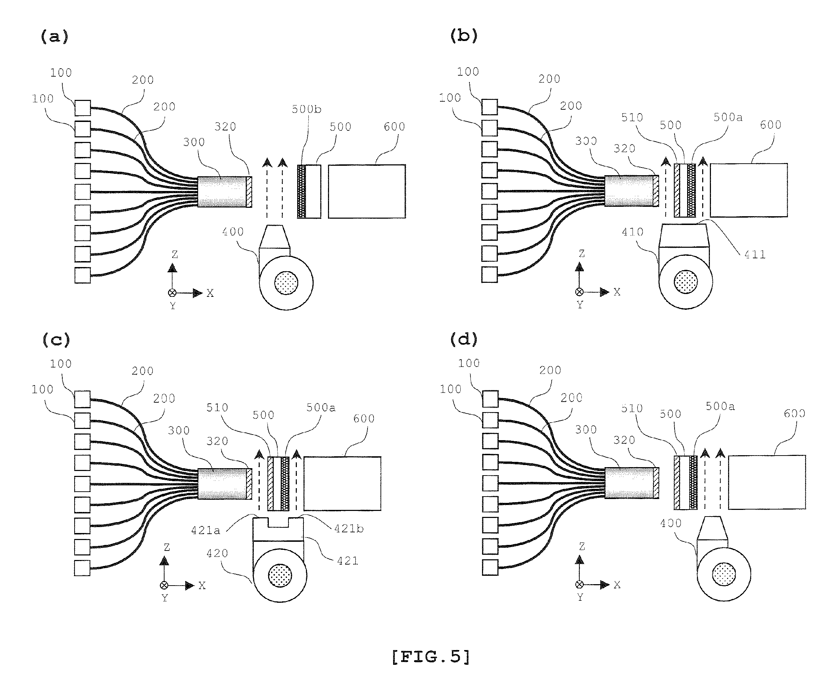

FIG. 5 (a) is a diagram showing a configuration of a modification example 3 of the first embodiment. This modification example is different from the configuration of FIG. 1(a) in that the diffuser 500 has a diffusion plane 500b on the incidence plane.

In this arrangement, since a distance from the diffusion plane to the incidence plane of the straight rod 600 is longer than that shown in FIG. 1(a), an increased number of laser light fluxes are lost by the diffusing function of the diffusion plane, and a decreased number of laser light fluxes are entered into the straight rod 600. However, it is possible to cool down simultaneously the surface of the AR coat 320 and the diffusion plane 500b prone to absorb heat, by cooling air delivered from the spot fan 400, thereby suppressing thermal deterioration of the output end portion of the bundle 300 and the diffusion plane 500b.

FIG. 5 (b) is a diagram showing a configuration of a modification example 4 of the first embodiment. This modification example is different from the configuration of FIG. 1(a) in that the incidence plane of the diffuser 500 is coated with the AR coat 510 and a spot fan 410 is disposed in place of the spot fan 400.

The spot fan 410 has an air outlet 411 wider in the X-axis direction. Cooling air delivered from the air outlet 411 is blown off into an area between the output end plane (surface of the AR coat 320) of the bundle 300 and the incidence plane of the straight rod 600. In this arrangement, cooling air delivered from the air outlet 411 cools down the surface of the AR coat 320, the entire diffuser 500, and the incidence plane of the straight rod 600. Accordingly, it is possible to suppress thermal deterioration of the output end portion of the bundle 300, the entire diffuser 500, and the incidence plane of the straight rod 600.

Alternatively, in the arrangement of FIG. 5(b), a spot fan 420 shown in FIG. 5(c) may be used in place of the spot fan 410. In this arrangement, a duct 421 of the spot fan 420 is bifurcated to form two air outlets 421a and 421b, as shown in the diagram. Cooling air generated by the spot fan 420 is separated into two by the duct 421 and the separated air flows are delivered from the air outlets 421a and 421b. The cooling air delivered from the air outlets 421a and 421b travel into a gap between the bundle 300 and the diffuser 500 and a gap between the diffuser 500 and the straight rod 600. This makes it possible to cool down directly by the cooling air, the surface of the AR coat 320, the surface of the AR coat 510, the diffusion plane 500a, and the incidence plane of the straight rod 600.

In the arrangement of FIG. 5(b), if an organic adhesive agent such as the epoxy resin 310 or the like is not used at the output end portion of the bundle 300, the output end portion of the bundle 300 is less prone to suffer thermal deterioration. In this case, the cooling air may be sent to only the gap between the diffuser 500 and the straight rod 600, as shown in FIG. 5(d). Alternatively, instead of the foregoing arrangement, the duct 421 may be configured as shown in FIG. 5(c) to blow off a larger amount of cooling air from the air outlet 421b than that from the air outlet 421a.

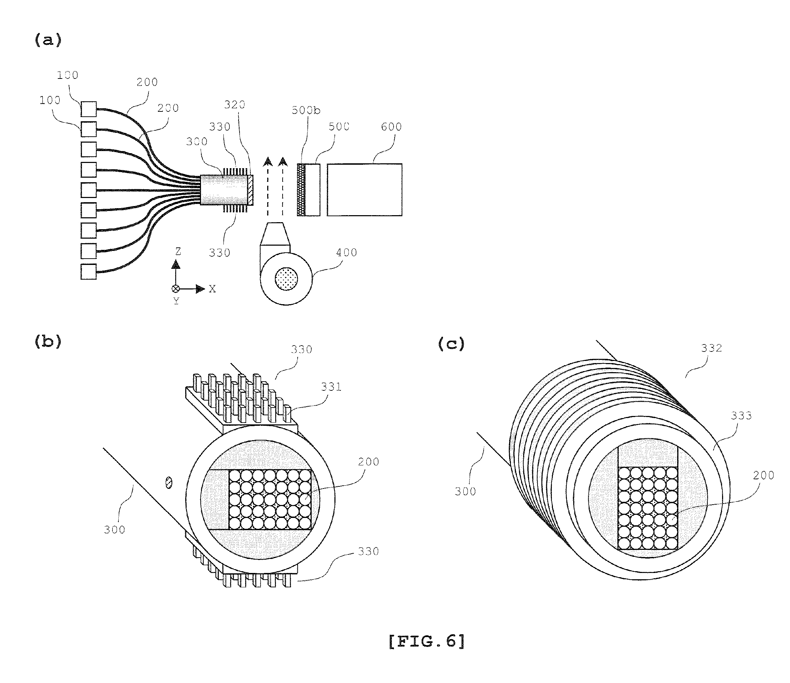

FIG. 6 (a) is a diagram showing a configuration of a modification example 5 of the first embodiment. This modification example is different from the configuration example of FIG. 1(a) in that heat sinks 330 are arranged at the output end portion of the bundle 300 and the diffusion plane 500b is formed on the incidence plane of the diffuser 500.

FIG. 6(b) is a perpendicular view of an output end portion of the bundle 300 in this arrangement. As illustrated, two heat sinks 330 are arranged on an external side of the output end portion of the bundle 300 so as to sandwich the optical fibers 200 therewith. A plurality of heat release pins 331 are arranged at intervals in the heat sinks 330. This facilitates heat release from the output end portion of the bundle 300 by the heat sinks 330, thereby to further suppress temperature increase at the output end portion of the bundle 300.

In this case, three or more heat sinks 330 may be disposed on the external side of the output end portion of the bundle 300. Alternatively, the heat sinks 330 may be disposed on a whole circumference of the output end portion of the bundle 300.

Alternatively, the heat sinks may have heat release plates in place of the heat release pins 331. In this case, heat sinks 332 having doughnut-shaped heat release plates 333 arranged at predetermined intervals may be used as shown in FIG. 6(c), for example. This also facilitates heat release from the output end portion of the bundle 300 as in the arrangements shown in FIGS. 6(a) and 6(b).

In the configurations of FIGS. 6 (a) to 6(c), the heat sinks 330 may be cooled down by a spot fan other than the spot fan 400. Alternatively, the heat sinks 330 may be cooled down by the spot fans 410 and 420 shown in FIGS. 5(b) and 5(c), together with other areas to be cooled.

### <Second embodiment>

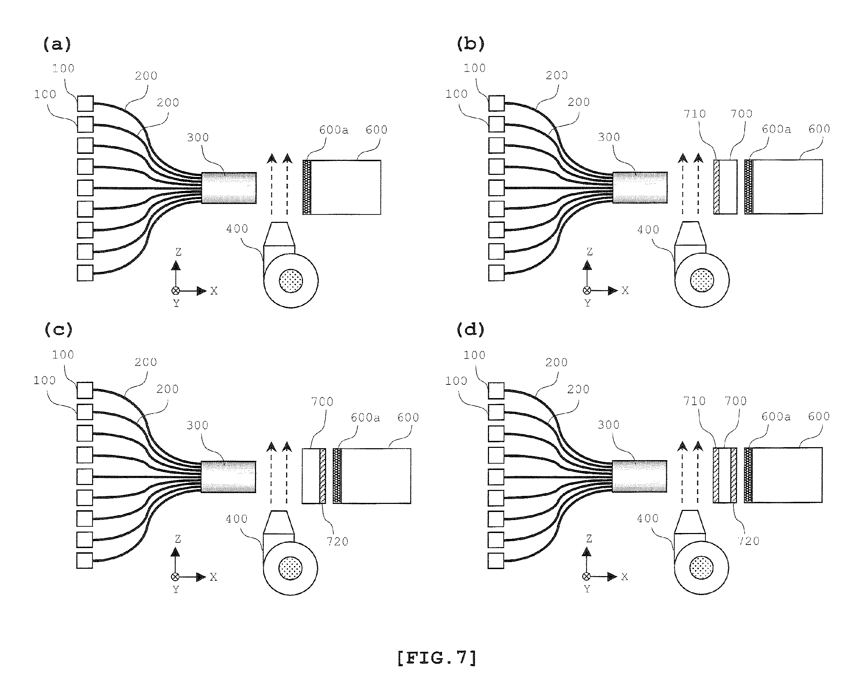

FIG. 7(a) is a diagram showing a configuration of an illumination device of a second embodiment. This embodiment is different from the configuration shown in FIG. 4(a) in that the diffuser 500 is eliminated and a diffusion plane 600a is disposed on the incidence plane of the straight rod 600. A distance between the output end plane of the bundle 300 and the incidence plane of the straight rod is identical to that in the first embodiment.

In this case, laser light entered into the straight rod 600 may be reflected by the diffusion plane 600a and entered into the output end plane of the bundle 300. That is, the reflected and returned light may lead to temperature increase at the output end plane of the bundle 300. However, in this embodiment, the configuration of the illumination device can be simplified to decrease a parts count.

FIG. 7 (b) is a diagram showing a modification example 1 of the second embodiment. The modification example 1 is different from the configuration of FIG. 7(a) in that a glass plate 700 is interposed between the output end plane of the bundle 300 and the straight rod 600.

The glass plate 700 is a parallel plate light-transmissive material, and disposed on a position shifted to the output plane side of the bundle 300. Incidence and output planes of the glass plate 700 are made flat and vertical to the X-axis direction. In addition, the incidence plane of the glass plate 700 is coated with an AR coat 710.

In this case, the AR coat 710 suppresses light reflection on the incidence plane of the glass plate 700, thereby preventing temperature increase at the output end plane of the bundle 300 due to returned light as compared with the configuration of FIG. 7(a). In addition, placing the incidence plane of the glass plate 700 close to the output plane of the bundle 300 allows the glass plate 700 to let in a larger amount of laser light. As a result, light from the bundle 300 can be efficiently guided to the straight rod 600. Accordingly, the straight rod 600 can let in laser light more efficiently, thereby resulting in improved use efficiency of laser light.

Therefore, according to the configuration of the modification example 1 shown in FIG. 7(b), it is possible to provide the advantage of the second embodiment, enhance use efficiency of laser light, and suppress thermal deterioration of the output end portion of the bundle 300.

FIG. 7 (c) is a diagram showing a modification example 2 of the second embodiment. The configuration of FIG. 7(c) is different from the configuration of FIG. 7(b), in that an AR coat 720 is applied to the output plane of the glass plate 700, not the incidence plane of the same. This also makes it possible to suppress temperature increase at the output end plane of the bundle 300 as in the modification example 1 of the second embodiment. However, in this configuration, part of laser light is reflected by the incidence plane of the glass plate 700 and entered into the output plane of the bundle 300, which is prone to cause temperature increase at the output end portion of the bundle 300 as compared with the modification example 1 of FIG. 7(b).

FIG. 7 (d) is a diagram showing a modification example 3 of the second embodiment. This modification example is different from the configuration of FIG. 7 (b) in that the AR coat 720 is further applied to the output plane of the glass plate 700. This further enhances use efficiency of laser light as compared with the modification example 2 of the second embodiment.

### <Third embodiment>

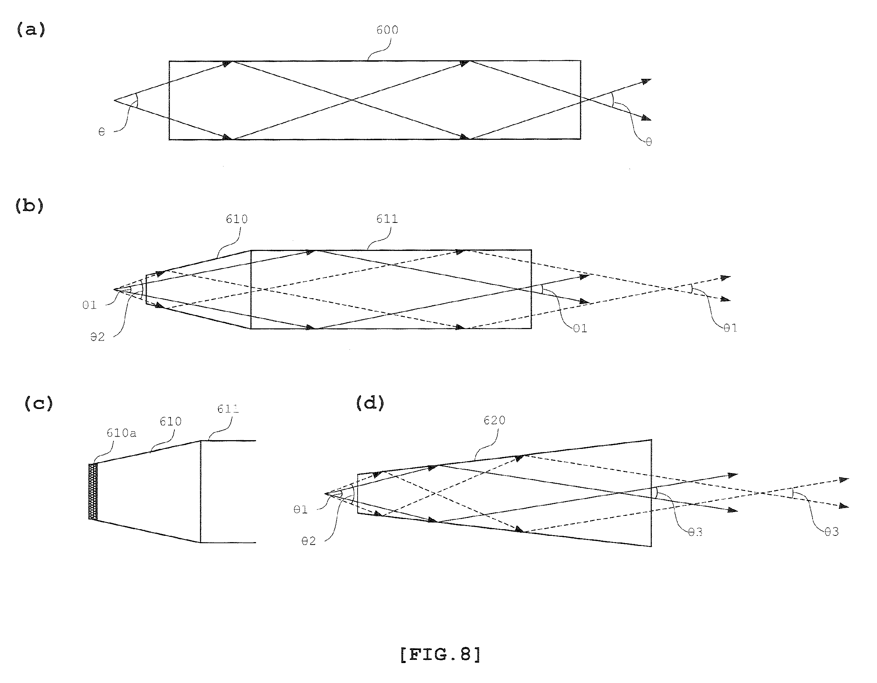

FIG. 8 (a) is a diagram showing the straight rod 600 used in FIGS. 1, and 4 to 6. The straight rod 600 unifies intensity distribution of laser light. However, as shown in FIG. 8(a), laser light entered into the straight rod 600 at the angle θ is emitted from the straight rod 600 at the same angle θ.

The laser light entered into the straight rod 600 includes red light (R), green light (G), and blue light (B). For example, G light and B light are almost identical in emission angle, and R light is smaller in emission angle than G light and B light. In addition, the straight rod 600 does not change emission angles of the color lights, as described above. This raises a problem that the projection lens at the stage subsequent to the illumination device lets in R light at a smaller emission angle without almost loss, but fails to let in peripheral light fluxes of G light and B light at larger emission angles, which leads to attenuation of G light and B light.

FIG. 8(b) is a diagram showing major constituent parts of the third embodiment for solving such a problem caused by differences in emission angle. In this configuration, a tapered rod 610 is connected to the incident end plane of the straight rod 611 so as to be integrated with the straight rod 611. Such an integral structure is disposed in place of the straight rod 600 in FIGS. 1, and 4 to 6.

Assumption is made here that the emission angle of R light is designated as θ1, and the emission angle of G light and B light is designated as θ2. Length and inclination of the tapered rod 610 are set such that all R light, G light, and B light entered into the incident end plane of the tapered rod 610 can be emitted from the straight rod 611 at the uniform emission angle θ1. That is, the integral structure of the straight rod 611 and the tapered rod 610 allows the emission angle of G light and B light to be adapted to the emission angle of R light.

Accordingly, if the integral structure of the tapered rod 610 and the straight rod 611 shown in FIG. 8 (b) is used, R light, G light, and B light become almost identical in emission angle, which allows the projection lens to let in the color lights efficiently. This makes it possible to project a favorable image onto a projection plane.

FIG. 8(c) is a diagram showing a modification example 1 of the third embodiment. This modification example is different from the configuration of FIG. 8(b) in that a diffusion plane 610a is disposed on the incidence plane of the tapered rod 610. The straight rod 600 shown in FIGS. 7(a) to 7(d) are replaced with the tapered rod 610 and the straight rod 611 in this modification example.

In this arrangement, the diffusion plane 610a unifies intensity distribution of laser light but decreases efficiency of letting in color lights due to a larger emission angle. However, the tapered rod 610 can suppress the emission angles of the color lights to lower levels. Therefore, as described above with reference to FIG. 8(b), it is possible to enhance the projection lens in efficiency of letting in color lights, as compared with the configurations of FIGS. 7(a) to 7(d).

FIG. 8(d) is a diagram showing a modification example 2 of the third embodiment. This modification example is different from the configuration of FIG. 8(b) in that a tapered rod 620 is used alone. In this arrangement, length and inclination of the tapered rod 620 are set so that lights can be emitted from the tapered rod 620 at an uniform angle θ3.

In this arrangement, the tapered rod 620 unifies laser light in both intensity distribution and emission angle. This produces the same advantage as described above with reference to FIG. 8(b).

### <Specific configuration examples of the bundle>

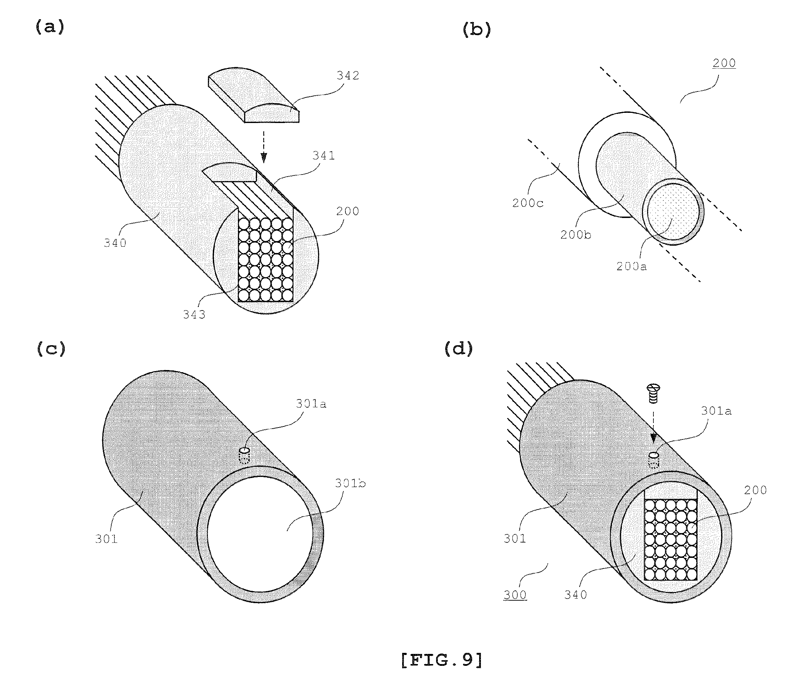

FIG. 9 is a diagram showing specific configuration examples of the bundle 300 used in the foregoing embodiments.

FIG. 9 (a) is a diagram showing a configuration of a holder 340 bundling together a plurality of optical fibers 200. As illustrated, the holder 340 has the shape of a cylinder. The holder 340 has a fiber housing portion 343 that is rectangular in cross section and penetrates the holder 340 in a forth and back direction. The holder 340 has on an upper front surface an opening 341 connected to the fiber housing portion 343. The plurality of optical fibers 200 is housed in the fiber housing portion 343 such that output end planes of the fibers are aligned with the front surface of the holder 340. The holder 340 is formed by a metallic material such as brass.

FIG. 9(b) is a diagram showing the output end portion of one optical fiber 200. Each of the optical fibers 200 has an outer surface of a core 200a and a clad 200b covered with a film 200c between the light source portion 100 and the holder 340, as shown in the diagram. Meanwhile, the portions of the optical fibers 200 bundled together by the holder 340 include only the cores 200a and the clads 200b with the film 200c stripped off. In this arrangement, the cores 200a are made of resin and the clads 200b are made of glass.

Returning to FIG. 9(a), the optical fibers 200 with the film 200c stripped off are laid in the fiber housing portion 343. At that time, an organic adhesive agent such as epoxy resin is flown from the opening 341 into the fiber housing portion 343 and the output end portions of the optical fibers 200 are fixed with the adhesive agent. Subsequently, a press cap 342 identical in size to the opening 341 is fitted into the opening 341. The press cap 342 is made of a metallic material such as brass, as in the case of the holder 340.

FIG. 9 (c) is a diagram showing a holder cover 301 placed on the holder 340. The holder cover 301 has the shape of a cylinder as the holder 340. The holder cover 301 has a holder housing portion 301b with an inner surface almost identical in shape to an outer surface of the holder 340. The holder cover 301 has near the front surface thereof a screw hole 301a communicating with the holder housing portion 301b. The holder 340 of FIG. 9 (a) is inserted into the holder housing portion 301b, and a screw is passed through the screw hole 301a as shown in FIG. 9(d). When the screw is tightened, a leading end of the screw presses the upper surface of the press cap 342 against the output end portions of the optical fibers 200. Accordingly, the output end portions of the plurality of the optical fibers 200 are fixed at the output end portion of the holder 340, whereby the bundle 300 is completed.

In the foregoing configuration, the core 200a is made of resin. Alternatively, the optical fibers 200 may have the cores 200a made of quartz. In this case, the clads 200b are made of fluoridated quartz. If the thus configured optical fibers 200 are used, the output end portions of the optical fibers 200 are fixed with an adhesive agent made of an inorganic material. This reduces a core diameter but can suppress temperature increase at the adhesive agent as compared with the case of using an organic adhesive agent such as epoxy resin or the like. In addition, the cores 200a made of quartz are higher in heat resistance. In this case, the bundle 300 is also constituted by the holder 340 and the holder cover 301, as in the foregoing embodiment.

If the cores 200a are made of quartz or the like, the output end portions of the optical fibers 200 may not be fixed with an adhesive agent. In this case, the clads 200b may be made of resin. In this arrangement, the output end portions of the optical fibers 200 are fixed within the fiber housing portion 343 by pressing force of the press cap 342 with the screw tightened. Accordingly, it is possible to avoid thermal influence on adhesive agent, although the optical fibers 200 are lowered in fixedness as compared with the case of using an adhesive agent.

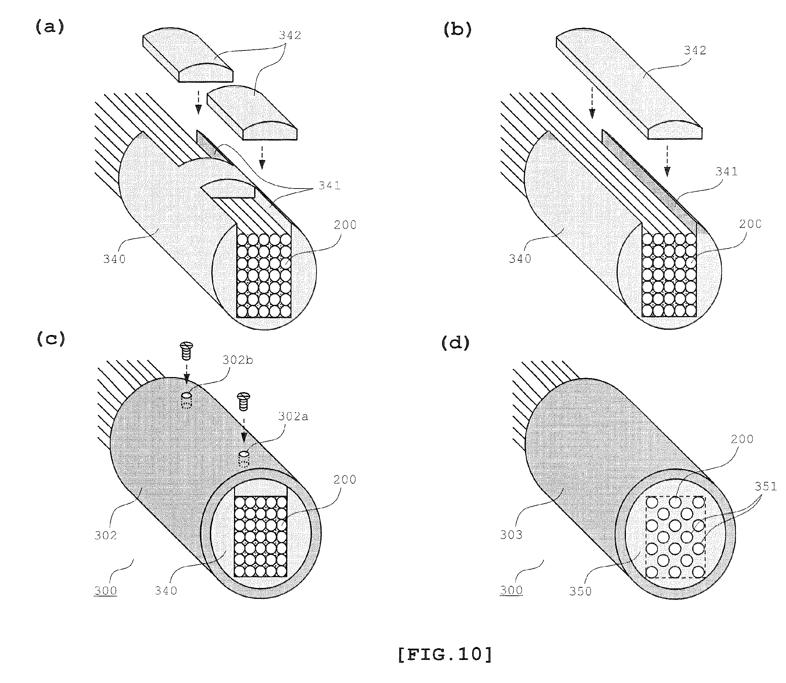

The opening 341 may be formed in the holder 340 on the front and back sides as shown in FIG. 10 (a) or may be formed in the holder 340 so as to connect from the front to back sides as shown in FIG. 10(b). In this case, a holder cover 302 is used as shown in FIG. 10 (c) . The holder cover 302 has on front and back sides thereof screw holes 302a and 302b, respectively, through which the screws press the press cap 342. This allows the optical fibers 200 to be also fixed on the back side of the holder 340, thereby increasing the optical fibers 200 in fixedness to the bundle 300. The optical fibers 200 may be fixed with an adhesive agent to the holder 340 on both the front and back sides or either thereof, or may not be fixed with an adhesive agent to the holder 340 on the front or back side.

FIG. 10(d) is a diagram showing another configuration example of the bundle 300.

This configuration is different from the example of FIG. 9(a) in that a holder 350 has holes 351 through which the optical fibers 200 pass. The optical fibers 200 are passed through the holes 351 of the holder 350 and fixed with an adhesive agent only on the back side of the holder 350. This saves use of an adhesive agent for fixing the optical fibers 200 at the output end portion of the bundle 300, thereby making it possible to avoid thermal influence on adhesive agent. In this arrangement, a holder cover 303 can be omitted.

### <Specific example of disposition of the spot fan>

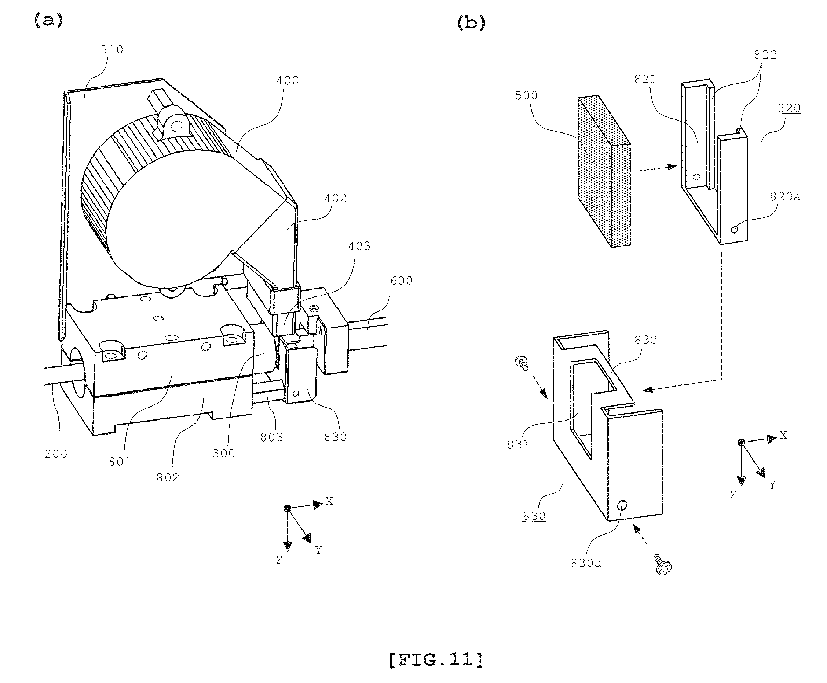

FIG. 11 is diagram showing a specific example of disposition of the spot fan 400 used in the first embodiment.

FIG. 11(a) is a diagram showing the spot fan 400 disposed within the illumination device. The spot fan 400 is fixed to a fixing plate 810 on a base plate of the illumination device. The plurality of optical fibers 200 is bundled together by the bundle 300, sandwiched and fixed together with the bundle 300 between fixing mechanisms 801 and 802 from Z-axis positive and negative directions. The fixing mechanisms 801 and 802 are disposed on the base plate of the illumination device so as to be movable in the X-axis direction. The fixing mechanism 802 has a bar 803 of a predetermined length protruded from the output end plane side of the bundle 300. A holder 830 is interposed between the output end plane of the bundle 300 and the incidence plane of the straight rod 600.

The fixing mechanisms 801 and 802 are configured so as not to come closer to the holder 830 in excess of a predetermined distance because the bar 803 contacts the holder 830. Accordingly, the fixing mechanisms 801 and 802 can be adjusted in position in the X-axis direction within a range in which the output end plane of the bundle 300 does not contact the holder 830.

FIG. 11(b) is a diagram showing a configuration of the holder 830. The holder 830 contains the diffuser 500 and a receiving portion 820 into which the diffuser 500 is fitted.

The receiving portion 820 has an opening 821, two flange portions 822, and two screw receivers 820a as illustrated in the diagram. The two screw receivers 820a are formed in symmetrical positions in the Y-axis direction with respect to the receiving portion 820. Accordingly, the diffuser 500 is fitted into the opening 821 and held by the receiving portion 820 so as not to move in the X-axis positive direction, the Y-axis direction, or the Z-axis positive direction.

The holder 830 has an opening 831, a flange portion 832, and two screw holes 830a, as shown in the diagram. The two screw holes 830a are formed in symmetrical positions in the Y-axis direction with respect to the holder 830. The receiving portion 820 holding the diffuser 500 is fitted into the holder 830 from the X-axis direction. In this state, the screws are tightened to the screw receivers 820a through the screw holes 830a. Accordingly, the diffuser 500 is fixed so as not to move in the X-axis negative direction or the Z-axis negative direction. In this state, the diffuser 500 is opposed to the output end plane of the bundle 300 with the opening 831 therebetween.

In the configurations of FIGS. 7(b) to 7(d), the glass plate 700, in place of the diffuser 500, is held by the holder 830.

If the holder 830 is thus configured, it is possible to cool down the output end plane of the bundle 300 and the incidence plane of the diffuser 500 by cooling air delivered from the air outlet 403 of the spot fan 400. If the optical fibers 200 of R light, G light, and B light are bundled by color by different bundles 300, each of the bundles 300 is provided with the spot fan 400 in the same configuration as shown in FIG. 11.

### <Optical system of this embodiment>

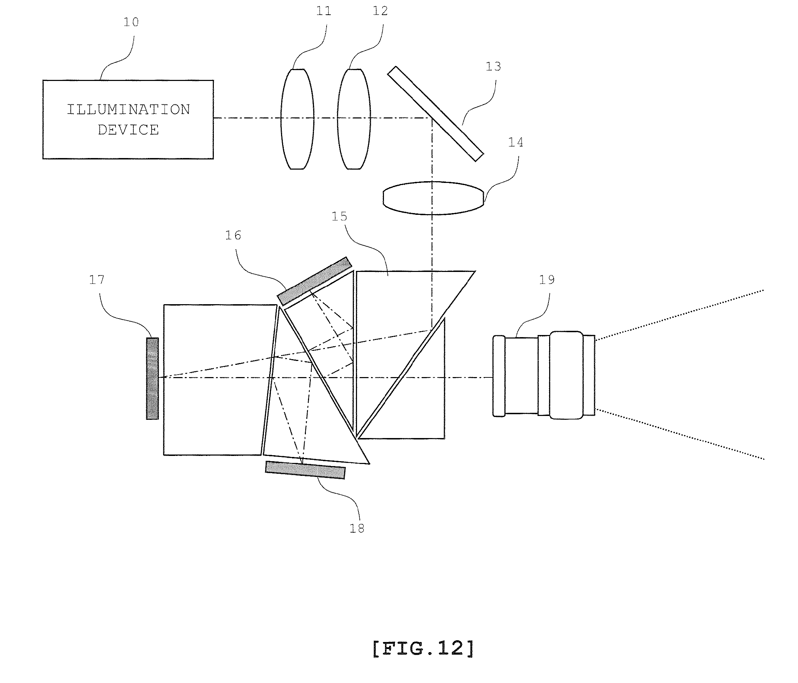

FIG. 12 is a diagram showing a configuration of an optical system of the projector in which the illumination device of this embodiment is installed. The illumination device 10 is identical to the illumination devices in the first to third embodiments or modification examples thereof.

Illumination light emitted from the illumination device 10 is entered into a Total Internal Reflection (TIR) prism 15 via relay lenses 11 and 12, a mirror 13, and a relay lens 14. The detailed configuration of the TIR prism 15 is described in JP 2006-79080A, for example.

The light entered into the TIR prism 15 is divided into R light, G light, and B light by a red prism, a green prism, and a blue prism constituting the TIR prism 15. The divided lights are entered into reflective imagers 16, 17, and 18 formed by Digital Micro-mirror Devices (DMDs). The R light, G light, and B light modulated by these imagers 16, 17, and 18 are unified in light path by the red prism, the green prism, and the blue prism. The combined light is entered from the TIR prism 15 into the projection lens 19.

FIG. 12 shows an optical system using the TIR prism 15. Alternatively, the illumination device in the foregoing embodiment can be appropriately used as an illumination device for another optical system (three-panel type optical system) in which color lights divided by a plurality of dichroic mirrors are entered into three liquid crystal panels from three directions, and the color lights modulated by the liquid crystal panels are combined by the dichroic prisms, or the like.

Although an embodiment of the present invention is as described above, the present invention is not limited to this embodiment. In addition, the embodiment of the present invention can be appropriately modified in various manners within the scope of technical ideas shown in the claims.

For example, although the optical fibers 200 are bundled together by the bundle 300 to combine the R light, G light, and B light in the foregoing embodiment, the fibers may be bundled by color by bundles instead. In this case, it is possible to unify the color lights from the bundles by rod integrators, combine the unified color lights by the dichroic mirror into white color, and apply the combined white light to the optical system of FIG. 12. Alternatively, the color lights unified by the rod integrators may be respectively guided to the liquid crystal panels of the three-panel optical system.

In addition, although the illumination device is installed in the projector in the foregoing embodiment, the illumination device of the present invention may be installed in other devices such as exposure devices, illumination devices for machining processes, and the like.

Besides, the embodiments of the present invention can be appropriately modified in various manners within the scope of technical ideas shown in the claims.

## Claims

1. An illumination device, comprising:
a plurality of light sources which emits light;
a plurality of optical fibers into which the light from the light sources is entered;
a bundle portion which bundles together output end portions of the plurality of optical fibers; and
a cooling system which cools down at least a light output end plane of the bundle portion.

2. The illumination device according to Claim 1, wherein the cooling system is configured to distribute cooling air to the light output end plane of the bundle portion.

3. The illumination device according to Claim 2, wherein the cooling system is configured to distribute the cooling air together with antistatic ions.

4. The illumination device according to Claim 1 to 3, wherein the cooling system cools down a predetermined area of the bundle portion extending from the light output end plane of the bundle portion.

5. The illumination device according to Claim 4, wherein the cooling system includes a heat sink having heat release effect in the predetermined area.

6. The illumination device according to Claim 1 to 3, wherein an antireflection means is disposed on the output end planes of the optical fibers.

7. The illumination device according to Claim 1 to 3, wherein
an optical member is disposed opposite to the light output end plane of the bundle portion, and
a light diffusion means or an antireflection means is disposed at least on one of a light output plane and a light incidence plane of the optical member.

8. The illumination device according to Claim 7, wherein the cooling system cools down the light incidence plane and the light output plane of the optical member.

9. The illumination device according to Claim 1 to 3, further comprising:
a rod integrator into which light emitted from the bundle portion is entered, wherein
the rod integrator has a light diffusion means on a light incidence plane.

10. The illumination device according to Claim 9, wherein
a light-transmissive member is interposed between the bundle portion and the rod integrator, and
an antireflection means is disposed on a light output plane and/or a light incidence plane of the light-transmissive member.

11. A projection display device, comprising:
an illumination device according to any one of claims 1 to 10;
a modulating means which modulates light from the illumination device; and
a projection lens which enlarges and projects the light modulated by the modulating means.
